# EUROPEAN PATENT APPLICATION

(11) **EP 2 654 279 A1**
(43) Date of publication of application: **23.10.2013**
(21) Application number: 12164720.0
(22) Date of filing: 19.04.2012
(51) Int. Cl.: H04M 3/436

(54) **Voice analysis**

(71) Applicant: JaJah Ltd, Ra'Anana (IL)
(72) Inventor: Neystadt, John, Ra'Anana (IL); Durrington, Neil, Ra'Anana (IL)
(74) Representative: Cordina, Kevin John

(57) **Abstract**

Telecommunications services and systems utilising voice intonation analysis to provide additional information to users. Information on caller's moods may be obtained from the intonation analysis and stored for later retrieval with information on the calls, including audio data, to which the information relates. An interactive system may be provided to perform intonation analysis on a caller's reasons for calling and the results of that analysis may be provided to the recipient to assist them in deciding whether to accept the call.

## Description

### Technical Field

This disclosure relates to systems and methods utilising voice analysis in the provision of communications services.

### Background

Voice analysis techniques can analyse speech to determine certain characteristics about the person speaking. For example, the person's mood (aggressive, excited, worried) can be gauged from characteristics of the voice. This analysis is not based on the words used, but rather on the intonation of the speaker and characteristics of the sound which have been found to be indicative of a speaker's mood, attitude, and emotions.

Practical uses of this technology have to-date been restricted to providing an indication of a person's mood during a conversation. For example, the technology may be utilised in call-centres to monitor performance of the operators.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Telecommunications services and systems utilising voice intonation analysis to provide additional information to users. Information on caller's moods may be obtained from the intonation analysis and stored for later retrieval with information on the calls, including audio data, to which the information relates. An interactive system may be provided to perform intonation analysis on a caller's reasons for calling and the results of that analysis may be provided to the recipient to assist them in deciding whether to accept the call.

There is provided a telecommunications system, comprising a telephony service; a voice analysis service in communication with the telephony service to receive data representing speech related to a call from a first terminal device to a second terminal device conducted by the telephony service; wherein the voice analysis service is configured to perform intonation analysis on the data representing speech and to output data indicative of the speaker's mood.

The telecommunications system may further comprise a communications history service configured to receive and store the output data indicative of the speaker's mood.

The communications history service may store data indicative of details of the call to which the output data relates.

The telecommunications system may further comprise a voice archive service in communication with the telephony network, wherein the voice archive service records the data representing speech and relates that data to the data indicative of the speaker's mood.

The voice analysis service is in communication with the telephony service via the voice archive service and receives the data representing speech via the voice archive service.

The telecommunication system may further comprise a terminal device configured to access data stored by the communications history service and present that data to a user of the device.

The output data indicative of the speaker's mood may be is transmitted to the second terminal device to assist the recipient in deciding whether to accept the call.

The telephony service may route the call to the second terminal device only if the user of that device indicates they wish to accept the call in response to receipt of the data indicative of the speaker's mood.

The telephony service may comprise a networked server configured to facilitate calls between the first and second terminal devices.

The voice analysis service may comprise a networked server in communication with the telephony service.

The communications history service may comprise a networked server in communication with at least one terminal device and the voice analysis service.

There is also provided a method of analysing telecommunications, comprising receiving data from a telephony service at a first computer system, the data representing speech; performing voice intonation analysis on the data representing speech, and outputting data indicative of the speaker's mood.

The data indicative of the speaker's mood may be transmitted to a communications history service and stored.

The data representing speech may be stored at a computer system and related to the data indicative of the speaker's mood.

The data indicative of the speaker's mood may be transmitted to a terminal device.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figures 1 and 2 show schematic block diagrams of a telephony service utilising voice intonation analysis;
Figure 3 shows a flow chart of a method of a system of voice intonation analysis; and
Figure 4 shows a schematic block diagram of an exemplary computing device.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

As noted hereinbefore practical uses of voice intonation analysis technology have been limited to analysis of voice conversations and is typically deployed by call-centres to analyse the effectiveness and behaviour of operators. The current disclosure relates to the provision of various new systems and methods based on voice intonation analysis.

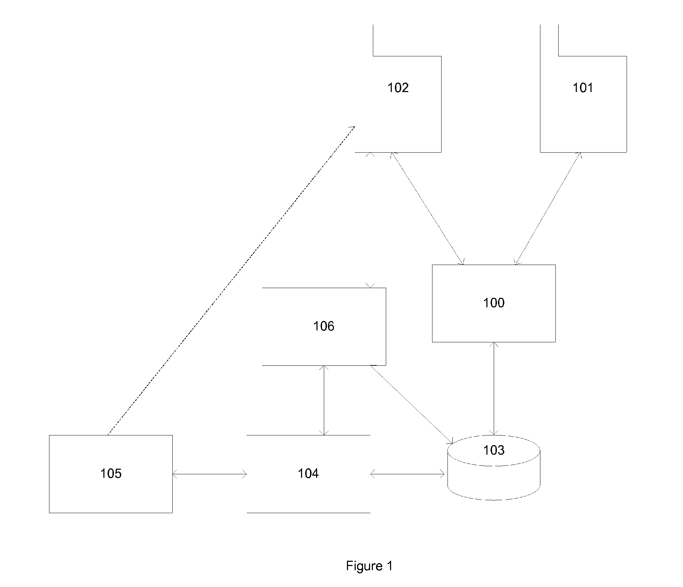

Figure 1 shows a schematic diagram of a telephony service utilising voice intonation analysis. Telephony service 101 provides voice (or video) connections for calls between terminal devices 100 and 102. Telephony service 101 may be a conventional telephone network, or may be a VoIP service. Terminal devices 100 and 102 may be conventional mobile or landline devices, or may be a computing system configured to provide telephony functions to a user (for example a 'softphone' provided by an application running on a PC or portable computing device, or via a Web Browser on such a device). For example, a computing device or mobile computing device may be provided with a VoIP client to conduct VoIP calls. As will be appreciated various combinations of telephony types may be utilised as is known in the art (for example, conventional telephony to VoIP calls).

Telephony service 101 is in communication with voice archive service 103. When a call is made to or from a phone subscribing to the relevant service, audio signals for the call are forwarded to voice archive service 103 which records the audio signals as audio data files. Data is also stored to identify the call and link it to the appropriate subscriber. Further information on the call, for example timing and participants, may also be stored at the voice archive service 103 or at other locations. To enable independent assessment of participants each side of a call may be recorded separately.

Depending on the subscriber's settings only some or all calls and audio data may be sent to the voice archive service 103. For example, a user may configure the system to record only all outgoing calls, or only all incoming calls. Furthermore, the system may be configured to record only one side of a call. The system may also be configured to direct voicemails to the voice archive service 103 such that the audio is stored there in addition to, or in place of, the conventional voicemail storage location.

Voice intonation analysis service 104 is in communication with voice archive service 103 and configured to perform an intonation analysis function on the recorded calls. The analysis service 104 output data representative of the mood of the person's voice being analysed. Any method of voice intonation analysis may be used. This data may comprise a number of values indicating different parameters of the person's mood. For example, values may be stored indicating call temperature (angriness), satisfaction, cooperation, deviation from optimal intonation, and personality type (conservative, enthusiastic). The values stored are normalised to allow comparison and assessment. For example, each parameter may be assigned a value of -1 (below average for this parameter), 0 (average), +1 (above average for this parameter). As will be appreciated any suitable mapping and valuation may be utilised.

Information on the particular voice being analysed may be utilised to improve accuracy of the analysis. For example, caller ID may be utilised such that the analysis service can learn characteristics of certain callers over time and tailor the analysis in response.

The output data is stored for future reference. The output data may be stored at the analysis service 104 with suitable indexing to relate the parameters to the particular recording, or may be stored with the recording in the voice archive service 103. Other data may also be stored to allow the values to be related to particular calls, users, or other parameters.

The mood data may be processed to provide a simplified representation of the mood. For example, a mood of angry and dissatisfied may provide a "bad" indication, whereas happy and satisfied may provide a "good" indication. Either the raw data, or processed data may be stored as described above.

In the embodiment of Figure 1, voice intonation analysis service 104 is in communication with notification service 105. Notification receives data from the analysis service 104 and issues notifications to the subscriber 102 (in Figure 1 the subscriber is indicated as 102, but as will be appreciated from the foregoing description either party to a call may be the subscriber receiving notifications). For example, when a voicemail is left by a caller and analysed by service 104, notification service 105 may transmit a message to the user indicating the mood of the caller and other data. For example, the notification service 105 may transmit an SMS message or Apple/Android style push notification indicating that a voicemail has been left by a caller ID of 'Mum' and that the mood was analysed as 'angry'. The mood information may be indicated in any means suitable for conveying the information. For example, a text label, a visual indication such as an icon or colour, sounds associated with particular moods, or phone vibration.

Notification service 105 and/or analysis service 104 may be configured to transmit notifications dependent on a range of parameters including caller-id, and mood. Notification service 105 is shown in Figure 1 as a discrete service, but it may also be integrated with other parts of the system as appropriate. In certain embodiments the notification service may be omitted without affecting the operation of the remaining parts of the system.

Voice archive browser service 106 is in communication with the voice archive service 103 and analysis service 104. Where the results of the analysis are stored at the voice archive 103, browser service 106 may be in communication only with that system, or where data is stored in other systems browser service 106 may also be in communication with those services.

Browser service 106 is in communication with subscriber terminal 102 such that a user can browse archived calls and the related data. For example, an application or web browser on a subscriber's device may display a list of all calls and voicemails over a particular time period. Data relating to the timing and participants in the calls may be displayed as retrieved from the archive service 103 (or other storage location as discussed above), together with data output and stored by the intonation analysis service 104. The user can therefore view data indicating the mood of the caller involved in the call as well as conventional data on the time and participants. Options may be provided to replay the audio of a message, which is retrieved from the voice archive service 103. Search/filtering functions may be provided to allow a user to display only certain types of calls or messages, for example only those that have a mood of happy. Visual representations of the mood data may be utilised.

In the exemplary embodiment described above the audio data is recorded and stored. In alternative embodiments the audio data may be analysed and the outputs stored, but the audio data can be dropped and not stored over time, for example due to privacy concerns. Although such a system may limit the data to which a user has access, the available data may still be useful. The analysis may be performed in real-time, or offline.

Other systems may be utilised in conjunction with the voice intonation analysis system. For example, voice-to-text transcription services could be used to present textual records of communications.

The notification service may use any appropriate messaging format to notify the subscriber as set out above. For example, SMS messages, email, or instant messages may be utilised. Furthermore, an application at the subscriber's device may receive signals from the notification service and output an indication to the user.

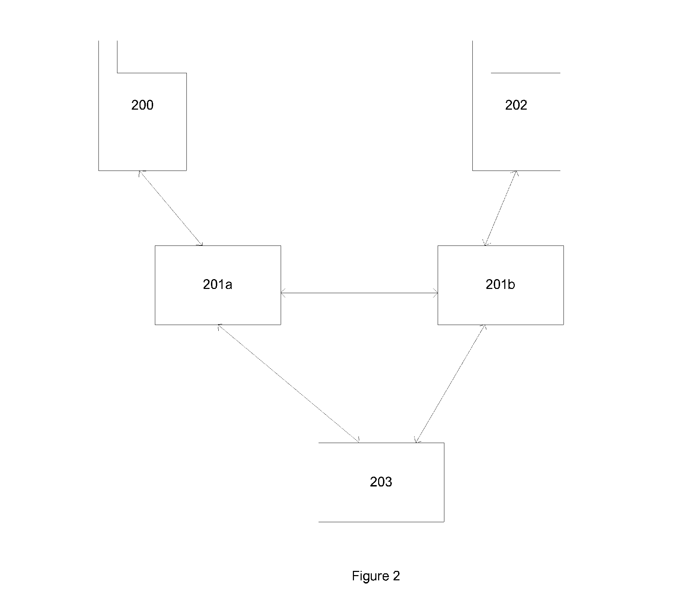

Figure 2 shows a schematic diagram of a further service that may be provided utilising voice intonation analysis. A subscriber terminal device 200 is connected to a telephone service 201a, 201b. Parts 201a and 201b are shown separately and discretely for convenience, but as will be appreciated the blocks represents the general functionality of a telephony service. As described above the telephone service and terminal devices 200, 202 may be of any known type. Device 202 represents any device in communication with telephony service 201 wishing to make a call to subscriber device 200.

Telephony service 201 is in communication with electronic secretary service 203 which provides services to callers attempting to reach the subscriber 200. An application at subscriber device 200 is provided to configure operation of the telephony service 201 in relation to the electronic secretary 203. The application may be provided by a program resident on the device, or via a web interface to a remote application.

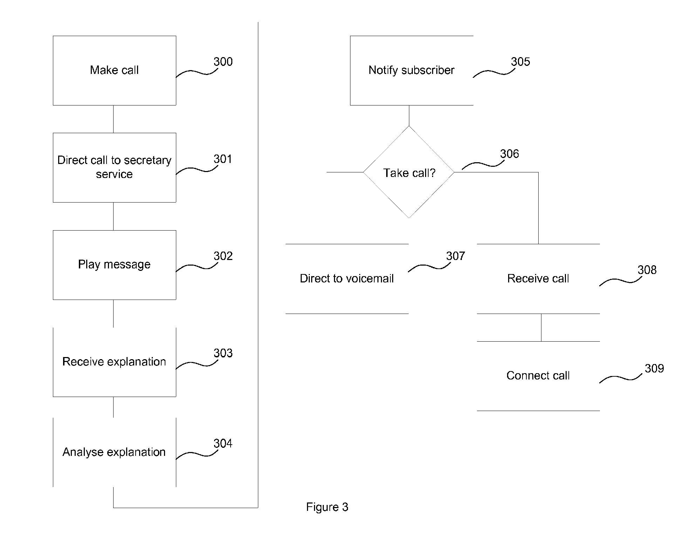

Figure 3 shows a flow-chart of a method implemented utilising the system of Figure 2.

At block 300 a caller 202 attempts a call to subscriber device 200. The subscriber has activated the electronic secretary service which at block 301 causes telephone service 201b to direct the call to the electronic secretary service 203. At block 302 the electronic secretary service 203 plays a message asking the caller for the reasons for their call. The message may be customised by the subscriber, or may be a generic or computer voice. Where the calls are video calls, the message may be a video message.

The caller responds to the message at block 303 with an explanation of their reason for the call. At block 304 the electronic secretary service 203 performs voice intonation analysis as described hereinbefore to generate a set of parameters descriptive of the caller's mood. In this embodiment it is not necessary to record and store the audio, but rather analysis may be conducted in real-time. This does not exclude the possibility of recording the audio for analysis, or for other purposes.

The electronic secretary service 203 issues a notification at block 305 to the subscriber device 200, notifying them of the incoming call and including details of the results of the intonation analysis. The details may include the caller ID, and other information considered beneficial to allowing the subscriber to elect how to proceed. For example, the notification could be a message stating "your boss is calling and is angry". The notification may be, for example, signalled over SIP INFO message or be an Apple/Android notification. As explained previously the mood information may be conveyed using any appropriate representation.

At block 306 the subscriber decides whether to take the call or not. If the call is not taken the subscriber device 200 indicates at block 307 that to the electronic secretary service 203 which signals the telephone service 201b to reject the call and handle according to regular logic, such as direct the call to voicemail, disconnect the call, etc according to telephony service logic.

If, at block 306, the call is taken the subscriber device 200 indicates at block 308 to the electronic secretary service 203 that the user wishes to receive the call. At block 309 the electronic secretary service 203 signals the telephony service 201 indicating that the call should be connected, which connects the call to the subscriber in the conventional way.

Once the call is connected, or routed to voicemail, the methods described in relation to Figure 1 may be utilised to record and analyse the call.

In alternative embodiments of the method shown in Figure 3, the call may be routed to the subscriber device 200 in parallel with execution of blocks 301 - 304, such that the subscriber's device commences ringing immediately, while the caller is explaining the reason for their call. The subscriber may elect to take the call immediately, which call is then completed by the telephony service. If the subscriber does not answer the call before the completion of blocks 301 - 304, the notification at block 305 is sent to the subscriber to provide additional information on whether to answer the call. The method then continues as shown in Figure 3. Further variations are also possible. For example, the call may be routed immediately to the subscriber, and only after a specified period, or a signal from the subscriber, may the call be directed to the electronic secretary service at block 301.

The system and method described with reference to Figures 2 and 3 thereby provide a telephony service that capable of analysing a requested call and enabling routing of the call based on that analysis.

As will be appreciated the term 'mood' is used to indicate any aspect of a user's character, attitude, or behaviour that can be determined from voice intonation analysis. Although examples of types of mood parameters have been given, these are exemplary only and any parameters may be output and utilised according to the principles described herein.

The term 'voice intonation analysis' is not used herein to restrict the analysis to only an analysis of intonation, but rather to indicate that an analysis is performed of the speech signal to extract information on a person's mood. That is, parameters other than intonation (for example, pitch) may be analysed. The term does not, however, include a semantic analysis of the words spoken. This is the commonly used meaning of this phrase in this technical area.

The term VoIP is not intended to restrict communications to only voice calls, but rather to include video calls and messaging. The term is therefore used to describe the general principle of transmitting a real-time communication over a packet-switched system as opposed to a conventional channel-switched communications system. As will be apparent, where the techniques described herein are applied to video calls they are applied to the audio part of the communications.

The term 'Terminal device' is not intended to restrict the devices to conventional telephone devices, but, as noted previously, solely to refer to a device at which a call is terminated. Accordingly, the device may be provided as a conventional mobile or landline devices, or may be a computing system configured to provide telephony functions to a user (for example a 'softphone' provided by an application running on a PC or portable computing device, or via a Web Browser on such a device). For example, a computing device or mobile computing device may be provided with a VoIP client to conduct VoIP calls.

The term 'service' is utilised to indicate a program or system which provides certain functions. For example, a messaging service may provide the function of forwarding messages between two entities. The service may take the form of a program running on a single computer system, or may be provided by a plurality of computing systems configured to work together to provide the functions. The functions may be accessed and utilised via a network system, for example the internet. Any service may be implemented in any way known to the Skilled Person. Although the various services have been described separately, one of more of the services may be provided as part of a single service, or by a single program of computer system. The description of the services separately is not intended to require any logical or physical separation.

Where the term 'connected' has been utilised in this document, it is not intended to require a permanent, always-on, connection. Rather it is used in the sense that the connected entities are connected, when required, to exchange data. For example two entities would be connected by the transmission of data from one entity to another through an IP network.

The foregoing description has been in respect of a mobile device, but as will be appreciated any form of computing device may be utilised in place of the mobile device. The generic term 'terminating device' may be utilised to describe devices between which communications are conducted.

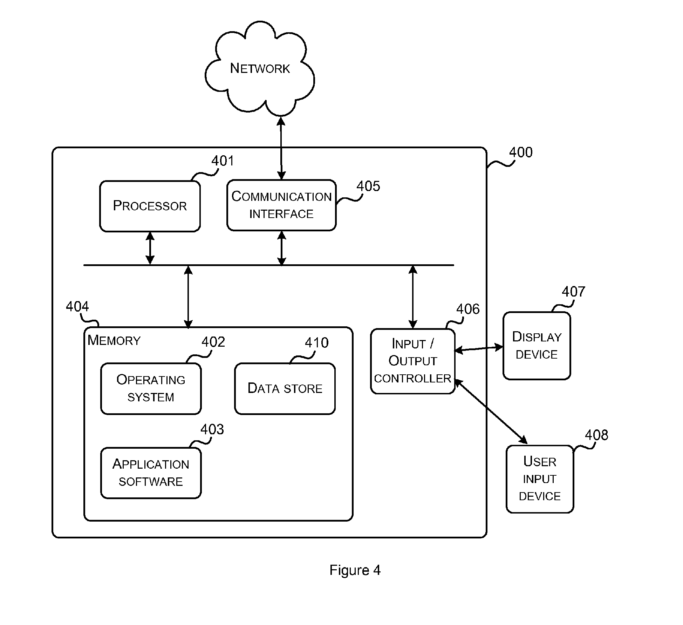

Figure 4 illustrates various components of an exemplary mobile device 400 which may be implemented as any form of a computing and/or electronic device, and on which embodiments of the foregoing description may be implemented.

Computing-based device 400 comprises one or more processors 401 which may be microprocessors, controllers or any other suitable type of processors for processing computer executable instructions to control the operation of the device in order to run applications, such as communication applications and the history application referred to herein. In some examples, for example where a system on a chip architecture is used, the processors 401 may include one or more fixed function blocks (also referred to as accelerators) which implement a parts of the methods of operation of the mobile device or applications described herein in hardware (rather than software or firmware). Platform software comprising an operating system 402 or any other suitable platform software may be provided at the computing-based device to enable application software 403 to be executed on the device.

The computer executable instructions may be provided using any computer-readable media that is accessible by computing based device 400. Computer-readable media may include, for example, computer storage media such as memory 404 and communications media. Computer storage media, such as memory 404, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 404) is shown within the computing-based device 400 it will be appreciated that the storage may be distributed or located remotely and accessed via a network or other communication link (e.g. using communication interface 405).

The computing-based device 400 also comprises an input/output controller 406 arranged to output display information to a display device 407 which may be separate from or integral to the computing-based device 400. The display information may provide a graphical user interface. The input/output controller 406 is also arranged to receive and process input from one or more devices, such as a user input device 408 (e.g. a touch screen or keypad). This user input may be used to provide user input to the communications and history applications. In an embodiment the display device 407 may also act as the user input device 408 if it is a touch sensitive display device. The computing-based device may also be provided with other functionality as is known for such devices. For example, the communication interface 405 may comprise a radio interface to a mobile telephone or other wireless communications system, and a microphone, speaker, and camera may be provided for voice and video calling.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A telecommunications system, comprising
a telephony service;
a voice analysis service in communication with the telephony service to receive data representing speech related to a call from a first terminal device to a second terminal device conducted by the telephony service; wherein the voice analysis service is configured to perform intonation analysis on the data representing speech and to output data indicative of the speaker's mood.

2. A telecommunications system according to claim 1, further comprising a communications history service configured to receive and store the output data indicative of the speaker's mood.

3. A telecommunications system according to claim 2, wherein the communications history service stores data indicative of details of the call to which the output data relates.

4. A telecommunications system according to claim 1, further comprising a voice archive service in communication with the telephony network, wherein the voice archive service records the data representing speech and relates that data to the data indicative of the speaker's mood.

5. A telecommunications system according to claim 4, wherein the voice analysis service is in communication with the telephony service via the voice archive service and receives the data representing speech via the voice archive service.

6. A telecommunication system according to any preceding claim 2, further comprising a terminal device configured to access data stored by the communications history service and present that data to a user of the device.

7. A telecommunications system according to claim 1, wherein the output data indicative of the speaker's mood is transmitted to the second terminal device to assist the recipient in deciding whether to accept the call.

8. A telecommunications system according to claim 7, wherein the telephony service routes the call to the second terminal device only if the user of that device indicates they wish to accept the call in response to receipt of the data indicative of the speaker's mood.

9. A telecommunications system, according to any preceding claim wherein the telephony service comprises a networked server configured to facilitate calls between the first and second terminal devices.

10. A telecommunications system, according to any preceding claim, wherein the voice analysis service comprises a networked server in communication with the telephony service.

11. A telecommunications system, according to any preceding claim, wherein the communications history service comprises a networked server in communication with at least one terminal device and the voice analysis service.

12. A method of analysing telecommunications, comprising
receiving data from a telephony service at a first computer system, the data representing speech;
performing voice intonation analysis on the data representing speech, and outputting data indicative of the speaker's mood.

13. A method according to claim 12, wherein the data indicative of the speaker's mood is transmitted to a communications history service and stored.

14. A method according to claim 12 or claim 13, wherein the data representing speech is stored at a computer system and related to the data indicative of the speaker's mood.

15. A method according to claim 12, wherein the data indicative of the speaker's mood is transmitted to a terminal device.
